# EUROPÄISCHE PATENTSCHRIFT

(11) **EP 1 154 943 B1**
(45) Veröffentlichungstag und Bekanntmachung des Hinweises auf die Patenterteilung: **06.08.2003**
(21) Anmeldenummer: 00909170.3
(22) Anmeldetag: 15.02.2000
(51) Int. Cl.: B65G 53/12, B65G 53/46

(54) **VORRICHTUNG UND VERFAHREN ZUM EINSCHLEUSEN VON SCHÜTTGUT IN EINE PNEUMATISCHE FÖRDERLEITUNG**
DEVICE AND METHOD FOR INWARDLY TRANSFERRING BULK MATERIAL INTO A PNEUMATIC CONVEYOR LINE
DISPOSITIF ET PROCEDE DESTINES A INTRODUIRE UN PRODUIT EN VRAC DANS UNE CONDUITE DE TRANSPORT PNEUMATIQUE

(30) Priorität: 23.02.1999 DE 19907690
(43) Veröffentlichungstag der Anmeldung: 21.11.2001
(73) Patentinhaber: Federhen, Bernd, 57078 Siegen (DE)
(72) Erfinder: Federhen, Bernd, 57078 Siegen (DE)
(74) Vertreter: Hiebsch, Gerhard F., Dipl.-Ing.
(86) Internationale Anmeldenummer: EP0001212
(87) Internationale Veröffentlichungsnummer: WO00050324

(56) Entgegenhaltungen:
- EP-A- 0 270 012
- DE-A- 3 528 301

## Beschreibung

Die Erfindung betrifft eine Vorrichtung und ein Verfahren zum Einschleusen von Schüttgut aus einem Vorbehälter oder einem Stauraum durch einen Schleusraum in eine pneumatische Förderleitung, wobei der Schleusraum durch einen beweglichen Verschlusskörper und wenigstens einen diesem in seiner Bewegungsbahn gegenüberliegenden Dichtungspartner gegen den Vorbehälter oder Stauraum verschließbar ist.

Vorrichtungen dieser Art sind der EP 0 166 959 B1 zu entnehmen; diese zeigt einlaufseitig einen kegelförmigen Verschlusskörper, in dessen Zentrum eine von einem elastischen Kragen umgebene Entlüftungsöffnung taktweise von einem gestuften Kegel aus elastischem Material geschlossen und geöffnet wird. Die jenem Verschlusskörper entgegenliegende Dichtung soll durch die -- durch einen darunter befindlichen ringförmigen Kanal -- zugeleitete Förderluft so verformt werden, dass letztere gleichmäßig auf den Verschlusskörper gerichtet austritt und so beim Schließvorgang die Berührungslinie Verschlusskörper - Dichtung produktfrei bläst. Hierdurch soll eine druckdichte Abdichtung des inneren Schleusraumes zum Vorratsbehälter hin sichergestellt werden. Die Entspannung der Druckluft am Ende des Fördertaktes erfolgt unmittelbar durch die nun offene zentrale Öffnung im Verschlusskegel in den darüber befindlichen, mit dem zu transportierenden Produkt gefüllten Vorratsbehälter. Die Luft muss durch die Poren des Produktes strömen.

Es hat sich gezeigt, dass die Luftverteilung durch die verformbare Dichtung nicht so gleichmäßig ist, dass der Verschlusskörper immer druckdicht gegen die Dichtkante der dichtung schließt. Weiter wurde mit Dehnmessstreifenmessungen an Vorbehälterwandungen festgestellt, dass die durch die Produktporen strömende Abluft bei höheren Vorbehältern -- beispielsweise in Silos -- Drücke aufbaut, die eine größere Wanddicke an diesen Behältern und damit höhere Kosten notwendig machen.

Dieser Mangel wurde durch die in EP 0 270 012 B1 beschriebene Erfindung dadurch beseitigt, dass die Entspannungsluft aus dem Schleusraum durch ein Rohrstück am Verschlusskegel mit einer oberhalb des Fließweges vom Schüttgut angeordneten Öffnung in ein Einlaufgehäuse geleitet und durch eine zentrische Öffnung des Einlaufgehäuses abgeleitet wird. Ist der Druck im Schleusraum abgebaut, fällt der Verschlusskegel nach unten und die Öffnung im Rohrstück wird in dieser Position des Verschlusskegels durch eine elastische Kegelspitze verschlossen. Die Öffnung ist nur beim Entspannungsvorgang offen; sowohl beim Fördervorgang der Vorrichtung als auch beim Einlaufen des Schüttgutes in den Schleusraum ist die Öffnung durch die elastische Kegelspitze verschlossen. Deshalb muss die vom in den Schleusraum einfließenden Schüttgut verdrängte Luft im Gegenstrom durch das einfließende Schüttgut geführt werden. Dies verlängert die zum Füllen des Schleusraumes erforderliche Zeitspanne.

Eine nicht unerhebliche Dauer des Füllvorganges entsteht auch beim Gegenstand der EP 0 166 951 B1. Bei dieser ist unterhalb des Verschlusselementes des Austrages des Schleusraumes eine Zuführleitung für Förderluft vorgesehen. Der größte Anteil der Förderluft tritt hier ein, bedingt durch den kleinen Querschnitt mit relativ hoher Strömungsgeschwindigkeit. Durch die im Mündungsquerschnitt beschleunigte Strömung entsteht ein Druckabfall im Auslaufgehäuse. Im Zusammenwirken mit dem aus dem Schleusraum nachfließenden und dem durch die Förderleitung abströmenden Produkt-Luftgemisch wird dadurch eine Auf- und Abbewegung der Auslaufklappe erzeugt. Hierdurch initiiert der von der Auslaufklappe betätigte Schalter Entlüftungsvorgänge, ehe der Schleusbehälter völlig entleert ist. Es entsteht Verschleiss in den Abluftleitungen und durch den nicht gänzlichen Auslauf des Schüttgutes aus dem Schleusraum ein Förderleistungsverlust. Ordnet man die Luftzuführung etwa 3 m stromabwärts an der Förderleitung an, wird der beschriebene Effekt beseitigt, wie der EP 0 270 012 B1 entnommen zu werden vermag. Da dann aber der Produkttransport vom Auslaufgehäuse bis zu dieser Lufteinspeisstelle nur von der am einlaufseitigen Verschlusskopf zugegebenen Luftmenge überwunden werden muss, wird die Förderleistung vermindert.

Die zu erreichende Förderleistung hängt von der Dauer der Taktzeit ab. Die Taktzeit setzt sich hauptsächlich zusammen aus der Entleerungszeit und der Füllzeit des Schleusraumes. Die Entleerungszeit ist im wesentlichen abhängig von den Schüttguteigenschaften, dem Förderweg, dem Förderquerschnitt, der Förderluftgeschwindigkeit und dem Förderdruck. Die Füllzeit des Schleusraumes wiederum wird i. w. von den Schüttguteigenschaften, dem Zulaufquerschnitt, dem offenen Querschnitt des Verschlusskopfes und den Strömungsverhältnissen im geöfneten Verschlusskopf bestimmt, wenn das Schüttgut in den Schleusraum einfließt. Es hat sich gezigt, dass der Einlauf nur mit relativ körnigen und schweren Schüttgütern -- etwa Quarzsand und Kristallzucker -- sicher und schnell erfolgt. Bei leichten staubförmigen Schüttgütern ist der Einlauf unsicher und die Einlaufzeit sehr lange, so dass keine ausreichenden Förderleistungen mit diesen Vorrichtungen erreicht werden.

Auch bei der Vorrichtung nach EP 0 270 012 B1 werden leichte Fördergüter im Einlaufgehäuse durch die im Gegenstrom aufsteigende Luft fluidisiert und füllen das Einlaufgehäuse weitgehend auf. Bei der nächsten Entlüftung des Schleusenraumes werden dann erhebliche Mengen des Fördergutes durch die zentrische Öffnung des Einlaufgehäuses ausgetragen. In der Praxis kann man die Förderluftmengen dieser Vorrichtungen durch einstellbare Drosselventile fest einstellen; eine Regelung der Druck- und Beladungsverhältnisse des Förderstromes erfolgt nicht. Dadurch ist es nicht möglich, die Energie der eingespeisten Förderluft optimal auszunutzen. Zum dauerhaften druckdichten Abschluss des Schleusraumes sind an den bekannten Vorrichtungen Dichtelemente aus elastischem Werkstoff erforderlich. Der zulässige Temperaturbereich wird von den Eigenschaften dieser Materialien sehr begrenzt.

In Kenntnis dieses Standes der Technik hat sich der Erfinder das Ziel gesetzt, eine einfache Vorrichtung und ein Förderverfahren für diese zu schaffen, mit der/dem die Förderleistungen gesteigert zu werden vermag und auch leichte staubförmige Schüttgüter in eine Förderleitung eingeschleust werden können. Zudem soll der Fördervorgang wirtschaftlicher gestaltet, und es sollen auch heiße Fördergüter in eine Förderleitung eingespeist werden können.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß weist der Verschlusskörper mindestens eine Entlüftungsöffnung auf, die in einen Luftabführkanal mündet sowie bei der aufwärtigen Schließbewegung eines Hubelementes mit einem Dichtkörper verschließbar ist; dessen abwärtiger Öffnungsweg ist zudem kürzer als der abwärtige Weg des Hubelementes mit dem Dichtkörper. Dazu hat es sich als günstig erwiesen, den Verschlusskörper so zu gestalten, dass er sich von einem eine innere Dichtkante bildenden engen Querschnitt zum Dichtkörper hin trichterartig erweitert und der enge Querschnitt ringförmiger Sitz für den Dichtkörper in Schließstellung ist.

Nach weiteren Merkmalen der Erfindung ist von der Entlüftungsöffnung des Verschlusskörpers ein Luftabführkanal zu einem Durchbruch in einem den Schleusraum vorgeordneten Einlaufgehäuse geführt, und der Luftabführungskanal ist in Betriebszustand am Durchbruch mit einer Abluftleitung verbunden. Zudem soll der Dichtkörper mit einer Kegelspitze für den ringförmigen Sitz versehen sein.

Der einlaufseitig im Schleusraum vorgesehene, in Schließstellung gegen eine umlaufende Kante dichtende Verschlusskörper weist also zumindest eine Entlüftungsöffnung auf, die in einen Luftabführkanal mündet und bei der aufwärtigen Schließbewegung mit dem Dichtkörper verschlossen wird.

Dank dieser Anordnung kann die vom einlaufenden Schüttgut aus dem Schleusraum verdrängte Luft den Schleusraum durch die Entlüftungsöffnung des Verschlusskörpers verlassen, ohne den einlaufenden Schüttgutstrom zu bremsen. Wird am Einlaufgehäuse beim Einlaufen des Schüttgutes in den Schleusraum zusätzlich Luft abgesaugt, so wird der Luftaustritt aus dem Schleusraum beschleunigt und damit die Einlaufzeit des Schüttgutes weiter verkürzt. Besonders für leichte feinkörnige Schüttgüter ist es vorteilhaft, die Entlüftungsöffnung im Verschlusskörper und die Luftaustrittsöffnung des Einlaufgehäuses wegunabhängig zu verbinden. Dies kann erfindungsgemäß beispielsweise durch teleskopartig ineinander geführte Hohlprofile oder durch einen Faltenbalg erfolgen. Dank dieser Maßnahmen ist die Luftabführung optimal und die erforderliche Schüttguteinlaufzeit sehr kurz. Diese Kanäle können leicht so ausgebildet werden, dass -- wie gesagt -- der mögliche Öffnungsweg des Verschlusskörpers geringer ist als der Öffnungsweg des Hubantriebes.

Zur Luftabführung eignen sich Ventilatoren, besonders aber Injektoren, die sich sehr vorteilhaft in einem Abluftkanal anordnen lassen. Als Hubantrieb sind besonders -- an sich bekannte -- pneumatisch betätigte Balgzylinder sowie doppeltwirkende Pneumatikzylinder, deren Auf- und Abbewegung durch wechselseitige Beaufschlagung der beiden Kolbenflächen erfolgt, aber auch einfach wirkende Pneumatikzylinder mit Plungerkolben geeignet. Bei der Ausführung mit Plungerkolben erfolgt die Schließbewegung mittels Druckluft, die Öffnungsbewegung entweder durch das Gewicht des Plungerkolbens und des Verschlusskörpers oder durch Beaufschlagung der Kolbenfläche mit Unterdruck. Dann wird die geöffnete Stellung durch Saugen am Plungerkolben erreicht.

Mit dieser Vorrichtung können Einrichtungen -- etwa Stifte und Führungen -- kombiniert sein, die den Verschlusskörper bei seiner Auf/Ab-Bewegung um seine Achse etwas drehen. Dadurch werden die Berührungsflächen von Verschlusskörper und umlaufender Dichtkante dauerhaft geglättet, riefenfrei gehalten und bleiben, auch wenn der Verschlusskörper und die umlaufende Dichtkante aus zähhartem Material -- z. B. Stahl -- bestehen, dauerhaft ausreichend dicht. Damit ist eine Ausgestaltung der erfindungsgemäßen Vorrichtung auch für heiße Schüttgüter geschaffen. Besteht die Dichtung, welche die umlaufende Dichtkante bildet, aus elastischem Werkstoff, so kann sie so ausgestaltet sein, dass die Schließbewegung des Verschlusskörpers zumindest zum Teil in eine Verstärkung der Dichtwirkung umgesetzt wird. Dank dieser Ausführung können sich deutlich einfacherer Vorrichtungen - - besonders zum Einschleusen granulatartiger Stoffe -- in pneumatische Förderleitungen herstellen lassen als dies mit Vorrichtungen nach dem Stand der Technik möglich ist.

Die Einspeisung der Förderluft kann -- wie bekannt -- zum einen in den Schleusraum durch einen auf den Verschlusskörper gerichteten Luftschleier und zum anderen, in Fließrichtung gesehen, hinter dem Auslaufquerschnitt des Schleusraumes erfolgen. Ist auch am Schleusraumausgangsquerschnitt ein Ventil vorhanden, so kann erfindungsgemäß ebenfalls hier ein Luftschleier zur Reinigung der Dichtkanten dieses Ventils auf diese gerichtet werden. Dies ist besonders bei zähharter Ausführung dieses Ventils vorteilhaft.

Die Zuführung der Förderluft nach dem Ventil soll erfindungsgemäß großflächig erfolgen. Damit werden von der eingespeisten Förderluft ausgehende Druckschwankungen in diesem Bereich verhindert. Die beiden Luftströme können -entsprechend dem Stande der Technik -- durch Drosselventile oder Blenden eingestellt werden. Vorteilhafter ist es aber, erfindungsgemäß die beiden Luftströme entsprechend dem im Schleusraum oder am Förderleitungsanfang schwankenden Druck zu steuern; dadurch ist es möglich, die Energie der zugeführten Druckluft optimal auszunutzen.

Bis ein vorgewählter Förderdruck erreicht ist, wird hauptsächlich dem Schleusraum Druckluft zugeführt, dann der dem Schleusraum nachgeschalteten Lufteinspeisung, bis der Förderdruck unter den vorgewählten Förderdruck abgesunken ist. Dadurch wird erreicht, dass das Verhältnis von Fördergutmenge zu Förderluftmenge immer nahezu optimal gehalten wird, für einen anteiligen Luftstrom können die Lufteinspeisstellen durch Kanäle verbunden sein.

Besonders bei Fördergütern mit schlechtem Lufthaltevermögen ist es vorteilhaft, mit der Lufteinspeisung an dem -- dem Schleusraum nachgeschalteten -- Ventil eine Lufteinspeisung am Förderrohranfang zu koppeln. Es können auch mehrere Lufteinspeisestellen entlang der Förderleitung angewandt werden, deren Steuerung von der erfindungsgemäßen Vorrichtung aus erfolgt. Die Schaltung der Lufteinspeisung kann pneumatisch oder elektropneumatisch erfolgen.

Im Rahmen der Erfindung liegt es auch, bei einer eingangs beschriebenen Vorrichtung zum Einschleusen von Schüttgut aus einem Vorbehälter oder einem Stauraum durch einen Schleusraum in eine pneumatische Förderleitung -- bei welcher der Schleusraum durch einen axial bewegbaren Verschlusskörper und wenigstens einen diesem in seiner Bewegungsbahn gegenüberliegenden Dichtungspartner gegen den Vorbehälter oder Stauraum verschließbar ist -- den einen der Dichtungspartner als eine querschnittlich einends eingespannte flexible Dichtungsfläche sowie den anderen als eine deren freien Randbereich mitnehmende und sie in der Bewegungsbahn zunehmend verformende Dichtkante zu gestalten; diese Dichtungsfläche soll bevorzugt ein den Verschlusskörper umgebender Ring sein. Hierfür wird ebenso gesondert Schutz begehrt wie für eine Ausgestaltung, bei welcher die Dichtungsfläche eine querschnittlich einends gehäuseseitig eingespannte Dichtlippe, und der Verschlusskörper mit wenigstens einer vorspringenden Dichtkante sowie mit zumindest einem die Dichtlippe untergreifenden Mitnehmer versehen ist. Es entsteht so ein äußerst effizienter und einfacher Abdichtungsbereich.

Die Maßgabe, den unteren Randbereich des sich gegen die Hubrichtung trichterartig erweiternden Verschlusskörpers unter Bildung der Dichtkante und eines geneigten Randabschnittes einwärts zu verformen, ermöglicht es zum einen, die erforderliche Dichtkante auf einfache Weise herzustellen sowie zum anderen, an dem geneigten Randabschnitt die dann davon abragenden Mitnehmer anzubringen.

Nach einem anderen Merkmal der Erfindung ist die Dicke der Dichtlippe größer als der Abstand der/des Mitnehmer/s von der Dichtkante, so dass diese nach dem Anheben des Randbereiches durch die Mitnehmer in die Lippenkänte einzugreifen vermag.

Bei einer anderen Ausgestaltung ist die verformbare Dichtung Teil des Verschlusskörpers und ihre Lippenkante zum Rande einer ortsfesten Öffnung der Vorrichtung gerichtet.

In jedem Falle hat es sich als günstig erwiesen, die Dichtlippe einends zwischen zwei Flanschen zu verklemmen. Zudem soll die Dichtlippe querschnittlich in einem Winkel von ihrer Einspannstelle abwärts geneigt sein, so daß ihre Lippenkante gegen die Hubrichtung weist. Letztere soll im übrigen in deren entspannter Stellung der Dichtlippe etwa parallel zum Hubweg bzw. der Längsachse der Vorrichtung verlaufen.

Das erfindungsgemäße Verfahren zeichnet sich dadurch aus, dass während des Einlaufens des Schüttgutes aus dem Schleusraum verdrängte Luft durch zumindest eine Entlüftungsöffnung im Verschlusskörper, die in einen Luftabführkanal übergeht, abgeleitet wird. Die verdrängte Luft kann zudem aus dem Schleusraum abgesaugt werden. Als vorteilhaft hat sich erwiesen, die Förderluft an mindestens zwei Einspeisestellen der beschriebenen Vorrichtung zuzuführen und diese Einspeisestellen abhängig von einem vorgegebenen Sollwert des Förderdrucks und einem momentanen Istwert des Förderdrucks wechselweise zu steuern.

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in:
- Fig. 1:: einen Längsschnitt durch eine Vorrichtung zum Einschleusen von Schüttgut in eine pneumatische Förderleitung in Einlaufstellung;
- Fig. 2:: einen vergrößerten Ausschnitt aus Figur 1;
- Fig. 3:: eine der Fig. 1 entsprechende Darstellung einer anderen Ausgestaltung der Vorrichtung, die besonders für heiße Schüttgüter geeignet ist;
- Fig. 4:: einen vergrößerten Ausschnitt aus Figur 3;
- Fig. 5:: ein gegenüber Fig. 1 vergrößertes Detail einer Ausgestaltung eines Dichtsystems an einer Vorrichtung zum Fördern granulatartiger Stoffe in zwei Halbschnitten von zueinander unterschiedlichen Betriebsstellungen;
- Fig. 6:: ein Steuerschema zur Einspeisung von Förderluft in die Vorrichtung.

Eine Vorrichtung 10 zum Einschleusen von -- in der Zeichnung nicht dargestelltem -- Schüttgut in eine pneumatische Förderleitung 12 weist über einem -- an einem Flanschstück 14 mit Ringspaltdüse 15 samt Druckluftanschluss 16 endenden -- Anschlussbogen 18 einen sich zu diesem konisch verjüngenden Sockelteil 20 eines Schleusgehäuses 22 auf. Dieses umgibt einen zylindrischen Schleusraum 24 der lichten Höhe h, an dessen oberem Ende einerseits ein Druckmesser 26 vorgesehen ist sowie anderseits eine Maximumsonde 27 einragt; bei 28 ist im Sockelteil 20 eine Leersonde angedeutet.

Einem oberen Ringflansch 23 des Schleusgehäuses 22 liegt ein ringförmiger Spülflansch oder Gehäusedeckel 30 auf, der an seinem inneren Ringrand mit einer Blaseinrichtung 32 versehen ist; von dieser geht ein radialer Druckluftanschluss 33 aus.

Auf dem Gehäusedeckel 30 ist ein turmartiges Einlaufgehäuse 34 mit Schraubbolzen 35 festgelegt, dessen -- einen Stauraum bildender -- Einlaufraum 36 von einer Firstwand 38 überspannt ist. Diese enthält an einem zentrischen Durchbruch 40 einen Injektor 41 mit Druckluftzuleitung 42. Der in die Gehäuselängsachse A fallende Durchbruch 40 durchsetzt auch einen von der Firstwand 38 aufragenden Anschlussflansch 44 für eine nicht wiedergegebene Abluftleitung. In den Einlaufraum 36 mündet seitlich ein von diesem aufwärts geneigtes Zulaufrohr 46 für das Schüttgut.

Vom Gehäusedeckel 30 ragen bolzenartige Rundstäbe 48 achsparallel in den Schleusraum 24, an welche andernends eine -- am oberen Rand des Sockelteils 20 angeordnete --Tragplatte 50 für ein höhenveränderliches Hubelement 52 angeschlossen ist; letzteres ist beispielhaft als Balgzylinder ausgebildet, in den ein -- unterhalb der Tragplatte 50 erkennbarer -- Luftanschluss 54 mündet.

Der Balgzylinder 52 trägt axial einen zylindrischen Dichtkörper 56 des Durchmessers d mit aufwärts ragender Kegelspitze 57. Beidseits dessen ragen von den Rundstäben 48 -in Abstand i zum Gehäusedeckel 30 -- radial Auflagen 58 ab.

Ein als Faltenbalg ausgebildeter Luftabführkanal 60 ist an der Unterseite der Firstwand 38 -- deren zentrischen Durchbruch 40 umgebend -- festgelegt. Der Faltenbalg geht nach unten hin an einer zylindrischen Entlüftungsöffnung 62 mit sich konisch erweiterndem Ringsitz 63 für jene Kegelspitze 57 in einen sich vom Ringsitz 63 konisch erweiternden Verschluss- oder Trichterkörper 64 über, dessen Trichterrand 66 jenen Auflagen 58 aufsitzt; diese begrenzen den Öffnungsweg des Verschlusskörpers 64 in Pfeilrichtung x.

Zwischen einer an der Oberseite des Gehäusedeckels 30 erkennbaren Dichtkante 70, die von einem Einsatzring 71 des Einlaufgehäuses 34 angeboten wird, und dem Verschlusskörper 64 ist ein ringförmiger äußerer Einlaufquerschnitt 72 der Breite b vorgesehen, durch den das Schüttgut in den Schleusraum 24 einfließt.

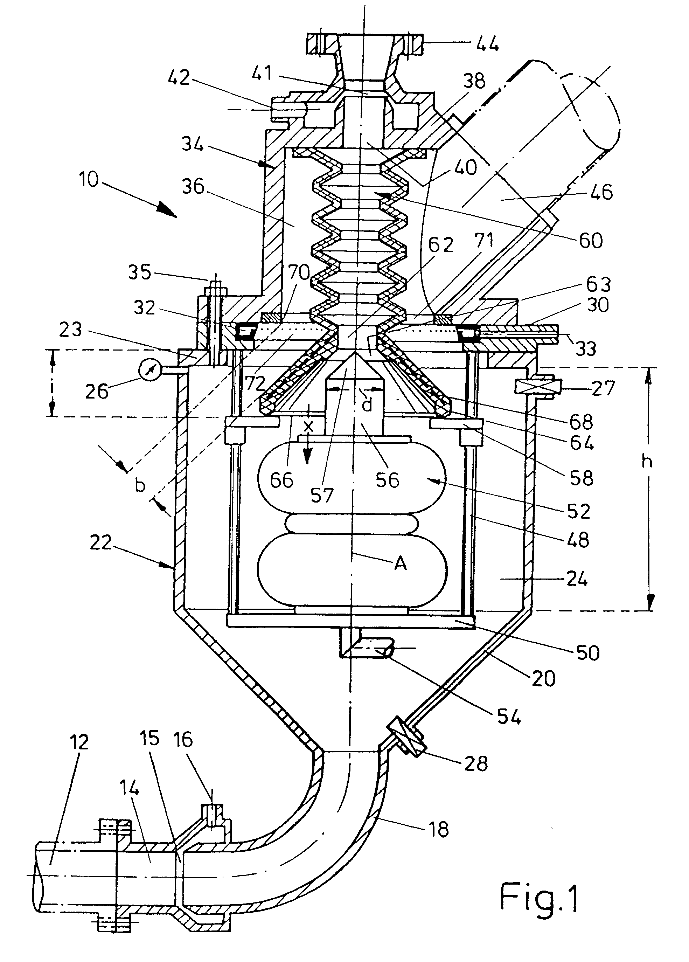

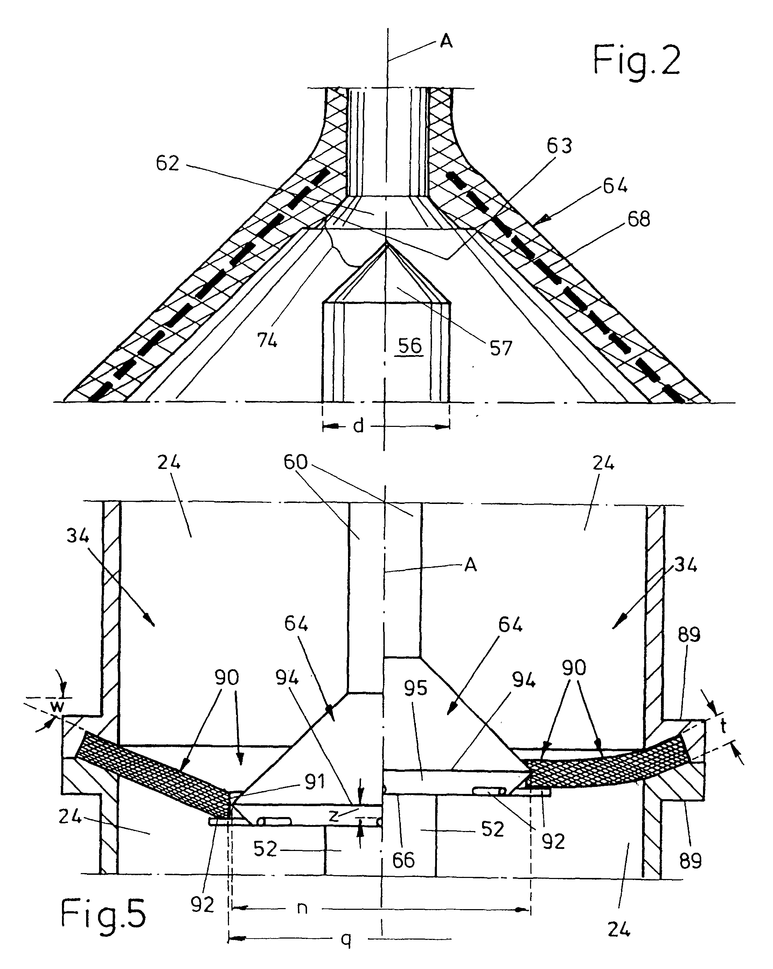

In der in Fig. 1 wiedergegebenen unteren Stellung des Dichtkörpers 56 bildet sich zwischen diesem und dem Verschlusskörper 64 ein Entlüftungsspalt 74 (Fig. 2).

Im dargestellten Beispiel der Fig. 1, 2 sind der Verschlusskörper 64 und der Luftabführkanal 60 einstückig mit eingefügten Verstärkungseinlagen 68 aus verschleissfestem elastischem Werkstoff gefertigt. Dadurch können die Dichtkante 70 und der Dichtkörper 56 aus hartem Material bestehen. Die Schleusvorrichtung 10 arbeitet taktweise. In der dargestellten Füllphase fließt das Schüttgut durch das Einlaufgehäuse 34 und den Einlaufquerschnitt 72 in den leeren Schleusraum 24. Die vom Schüttgut verdrängte Luft wird -unterstützt von dem durch die Druckluftzuleitung 42 gespeisten Injektor 41 -- gegen Pfeilrichtung x intensiviert durch den Entlüftungsspalt 74 und den Luftabführkanal 60 zu der am Anschlussflansch 44 anschließbaren Abluftleitung geführt.

Nach Ansprechen der Maximumsonde 27 oder nach Ablauf einer einstellbaren Füllzeit wird der Balgzylinder 52 durch den Luftanschluss 54 mit Druckluft beaufschlagt. Er hebt den Dichtkörper 56 gegen ihren Ringsitz 63 am Verschlusskörper 64 und versperrt so den Abluftweg. Auf seinem weiteren Hubweg hebt der Balgzylinder 52 mittels des Dichtkörpers 56 den Verschlusskörper 64 gegen die umlaufende Dichtkante 70 und versperrt so der gleichzeitig durch die Blaseinrichtung 32 zugeführten Förderluft den Weg ins Einlaufgehäuse 34. Im Schleusraum 24 baut sich der Förderdruck auf. Das Schüttgut wird der Ringspaltdüse 15 zugeführt und mit der dort gleichzeitig ausströmenden Druckluft durch die Förderleitung 12 abgefördert.

Ist der Schleusraum 24 leer, so wird dies durch die Leersonde 28 erfasst. Ist die Förderleitung 12 schließlich schüttgutfrei, wird dies durch den Druckabfall vom Druckmesser 26 erfasst. Eines der beiden Signale wird zur Einleitung der Entspannung der Druckluft im Balgzylinder 52 genutzt.

Der Balgzylinder 52 verkürzt sich, am Dichtkörper 56 bildet sich der Entlüftungsspalt 74 zum Ringsitz 63 des Verschlusskörpers 64. Der Restdruck aus dem Schleusraum 24 kann zur Abluftleitung entweichen. Nach dem Druckabbau im Schleusraum 24 fällt der Verschlusskörper 64 auf die Auflagen 58 und gibt dadurch den Einlaufquerschnitt 72 wieder frei. Der Entlüftungsquerschnitt 74 bleibt offen, neues Schüttgut kann einfließen. Die vom Schüttgut im Schleusraum 24 verdrängte Luft wird vom Injektor 41 abgezogen.

In dem vergrößerten Ausschnitt nach Fig. 2 ist vor allem der zwischen dem Ringsitz 63 des Verschlusskörpers 64 und der Kegelspitze 57 des Dichtkörpers verlaufende offene Entlüftungsspalt 74 zu erkennen, durch den die vom einfließenden Schüttgut verdrängte Luft ungehindert abströmen kann.

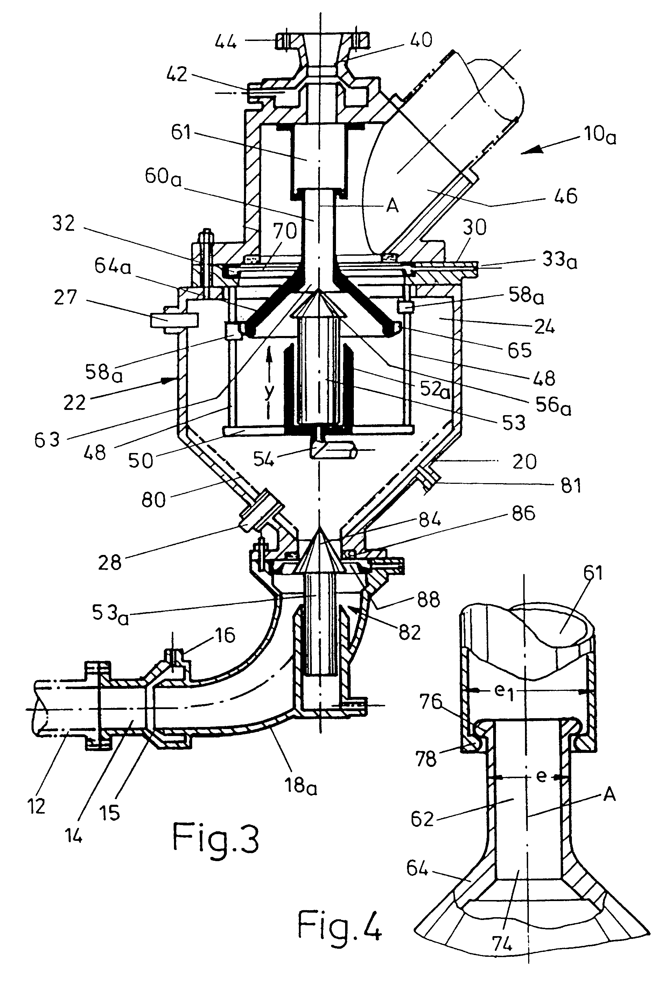

Das Hubelement der Vorrichtung 10ₐ nach Fig. 3 ist als ein dem Trichter- oder Verschlusskörper 64ₐ koaxial vorgesetzter Pneumatikzylinder 52ₐ mit Plungerkolben 53 ausgeführt, der sich nach oben in den nach oben konischen Dichtkörper 56ₐ fortsetzt. Zur Aufwärtsbewegung dieses Plungerkolbens 53 wird durch den Anschluss 54 Druckluft in den Pneumatikzylinder 52ₐ geleitet, zur Abwärtsbewegung Unterdruck an den Anschluss 54 gelegt. Bei seiner Aufwärtsbewegung verschließt der Dichtkörper 56ₐ den Entlüftungsquerschnitt oder -spalt 74, der in den hier als Hohlprofil des Außendurchmessers e ausgebildeten Luftabführkanal 60ₐ übergeht und in der geöffneten Stellung der Vorrichtung 10ₐ mit einem endwärtigen Außenwulst 76 -wie Fig. 4 verdeutlicht -- einem Innenbund 78 eines von der Firstwand 38 nach unten stehenden hohlen Kopfprofil 61 größeren Außendurchmessers e₁ aufliegt. Dank dieser Ausbildung wird der Entlüftungsquerschnitt 74 in geöffneter Stellung der Vorrichtung 10ₐ in der das Schüttgut in den Schleusraum 24 einfließt, einerseits offen gehalten, andererseits ist der Verschlusskörper 64ₐ frei beweglich, bis er auf seinem Schließweg in Richtung y den als Dichtkante wirkenden umlaufenden Ringsitz 63 erreicht und damit den Schleusraum 24 zum Einlaufgehäuse 34 hin abdichtet.

Am äußeren Umfang des Verschlusskörpers 64ₐ sind schräge Führungsflächen angeordnet, die mittels von den Rundstäben 48 abragender Nocken 58ₐ den Verschlusskörper 64ₐ bei seiner axialen Vertikalbewegung schrittweise um die Gehäuselängsachse A drehen. Dadurch werden partielle Undichtigkeiten, die z. B. durch Riefenbildung an der Dichtkante 70 entstehen können, beseitigt. Dies ist besonders vorteilhaft, wenn bei heißem Schüttgut die Dichtkanten 70 aus zähhartem, hitzebeständigem Material bestehen müssen.

Die Blaseinrichtung 32 zur Erzeugung des auf den Verschlusskörper 64ₐ gerichteten Luftschleiers ist hier als Ringdüse mit tangentialer Lufteinspeisung durch den Anschluss 33ₐ ausgeführt. Die Förderleitung 12 mit der Ringspaltdüse 15 ist mittels eines Auslaufventils 82 im Anschlussbogen 18ₐ vom Schleusraum 24 abkoppelbar. In diesem ist bei 80 ein poröser Konus mit Luftanschluss 81 skizziert, durch den der Fördergutaustrag aus dem Schleusraum 24 unterstützt wird.

Das Auslaufventil 82 ist beispielhaft mit einem kegeligen Schließkopf 84 mit Plungerkolben 53ₐ ausgeführt. Mittels einer tangential angeströmten Ringspaltdüse 88 wird der Sitz 86 des Auslaufventils 82 beim Schließvorgang mittels Luftschleier produktfrei geblasen. Auch andere Ventiltypen -- etwa Schieber oder Klappen -- können als Auslaufventil eingesetzt werden.

Der Schließkopf 84 wird wechselweise zum Verschlusskörper 64ₐ bewegt. Dadurch kann der Fördervorgang in der Förderleitung 12 bei drucklosem Schleusraum 24 aufrecht erhalten werden, wenn die Förderluftzuführung durch die Ringspaltdüse 15 des Flanschstückes 14 weiterhin erfolgt.

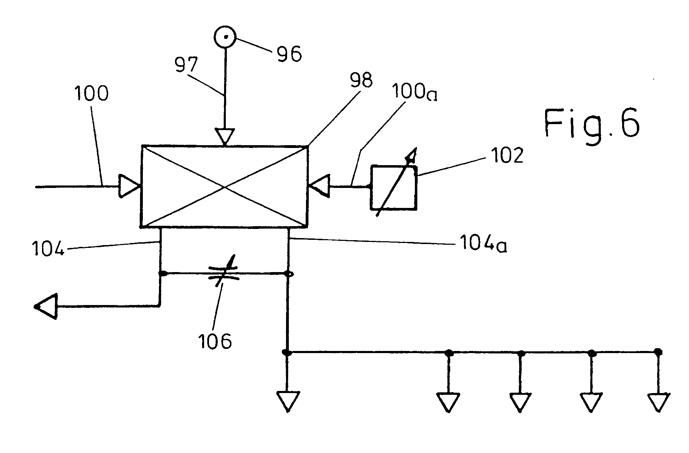

Eine besonders vorteilhafte Ausführungsform des Dichtsystems zwischen Einlaufgehäuse 34, dem Schleusraum 24 und dem Verschlusskörper 64 -- wie auch 64ₐ -- sowie deren Funktion verdeutlicht Fig. 5 in zwei Halbschnitten. Die linke Hälfte der Fig. 5 zeigt die untere Stellung des Verschlusskörpers 64 auf seinem Schließweg y an einer in eine Paarung von Flanschen 89 von Schleusgehäuse 22 und Einlaufgehäuse 34 in einem Neigungswinkel w von etwa 40° geneigt eingespannten Dichtung oder Dichtlippe 90 mit hier achsparalleler Lippenkante 91. Die obere Stellung des Verschlusskörpers 64, in der ein dichter Abschluss zwischen Einlaufgehäuse 34 und Schleusraum 24 erreicht ist, gibt die rechte Hälfte der Fig. 5 wieder.

Dieses Dichtsystem besteht aus dem Verschlusskörper 64 mit von ihm nach oben ragendem Luftabführkanal 60, dem Hubelement 52 sowie der elastischen Dichtung 90. Der sich nach unten trichterartig erweiternde Verschlusskörper 64 weist einen -- an einer Dichtkante 94 -- querschnittlich einwärts gebogenen Randabschnitt 95 auf, von dem radial stiftartige Mitnehmer 92 abragen. Deren Abstand z von der Dichtkante 94 ist kürzer als die Dicke t der Dichtung 90. Bei der Hubbewegung dieses Verschlusskörpers 64 eines maximalen Außendurchmesser n untergreifen die Mitnehmer 92 die Dichtung 90 so, dass deren Randbereich nach oben mitgenommen wird sowie sich deren Innendurchmesser q vermindert; die Lippenkante 91 der Dichtung 90 schmiegt sich dicht der umlaufenden Dichtkante 94 an, wie dies in Fig. 5 zur Verdeutlichung etwas überhöht dargestellt ist. Versuche haben ergeben, dass es ausreichend ist, wenn die Dichtkante 94 nur Bruchteile eines Millimeters in die Dichtung 90 eindringt.

Durch die Gestalt der Dichtung 90 und/oder eine Armierung der Dichtung 90 kann deren Verformungsverhalten optimal bestimmt werden.

Das System gestattet es auch, die verformbare Dichtung 90 - - nicht dargestellt -- als Teil des Verschlusskörpers 64 auszubilden; sie fährt in eine feststehende Öffnung ein und verformt sich dort so, dass sich ihr Außendurchmesser vergrößert und so einen dichten Abschluss in der Öffnung erzeugt.

Bei einer besonders vorteilhaften Lufteinspeissteuerung für die Schleusvorrichtung 10, 10ₐ fließt gemäß Fig. 6 von einer Druckluftquelle 96 Druckluft durch eine Leitung 97 einem Vergleicher 98 zu. In diesen mündet zudem eine Zuleitung 100, die mit dem Ist-Förderdruck der in Fig. 6 nicht wiedergegebenen Schleusvorrichtung 10, 10ₐ beaufschlagt ist, mit einem an einem Sollwert-Geber 102 vorgegebenen Förderdruck durch eine Zuleitung 100ₐ.

Am Ausgang des Vergleichers 98 sind Druckluftleitungen 104 und 104ₐ angeschlossen; die Druckluftleitung 104 führt an den Anschluss 33 der Blaseinrichtung 32, gegebenenfalls zum Anschluss 81 des porösen Konus 80 (Fig. 3). Der Druckluftausgang 104ₐ ist der Ringspaltdüse 15 des Flanschstückes 14 zugeordnet und kann zu Anschlüssen entlang der Förderleitung 12 weitergeführt werden. Beide Druckluftleitungen 104, 104ₐ sind durch eine Drosselstrecke 106 mengenbegrenzt miteinander verbunden.

Der Vergleicher 98 schaltet die abgehenden Druckluftleitungen 104, 104ₐ wechselsweise so, dass -- wenn der Ist-Förderdruck an der Zuleitung 100 gleich oder größer ist als der vom Sollwert-Geber 102 vorgegebene Druck -- die durch die Leitung 97 zufließende Druckluft der abgehenden Druckluftleitung 104ₐ zugeleitet wird. Ist der Ist-Förderdruck an der Zuleitung 100 kleiner als der Soll-Förderdruck an der Zuleitung 100, wird die Druckluft der abgehenden Druckluftleitung 104 zugeschaltet.

Der Vergleicher 98 kann direkt pneumatische Signale verarbeiten oder elektrische, wenn das durch die Zuleitung 100 zugeführte Signal in einer elektrisches Signal umgewandelt und das Sollwert-Signal elektrisch vorgegeben wird.

## Patentansprüche

1. Vorrichtung zum Einschleusen von Schüttgut aus einem Vorbehälter oder einem Stauraum durch einen Schleusraum (24) in eine pneumatische Förderleitung, wobei der Schleusraum durch einen axial bewegbaren Verschlusskörper (64, 64ₐ) und wenigstens einen diesem in seiner Bewegungsbahn gegenüberliegenden Dichtungspartner (56, 56ₐ) gegen den Vorbehälter oder Stauraum verschließbar ist,
**dadurch gekennzeichnet,**
**dass** der Verschlusskörper (64, 64ₐ) mindestens eine Entlüftungsöffnung (62) aufweist, die in einen Luftabführkanal mündet und bei der aufwärtigen Schließbewegung (y) eines Hubelementes (52, 52ₐ) mit einem Dichtkörper (56, 56ₐ) verschließbar ist, wobei dessen abwärtiger Öffnungsweg (x) kürzer ist als der abwärtige Weg des Hubelementes mit dem Dichtkörper.

2. Vorrichtung nach Anspruch 1, **dadurch gekennzeichnet, dass** sich der Verschlusskörper (64, 64ₐ) von einem eine innere Dichtkante (63) bildenden engen Querschnitt zum Dichtkörper (56, 56ₐ) hin trichterartig erweitert und der enge Querschnitt ringförmiger Sitz für den Dichtkörper in Schließstellung ist.

3. Vorrichtung nach Anspruch 1 oder 2, **dadurch gekennzeichnet, dass** von der Entlüftungsöffnung (62) des Verschlusskörpers (64, 64ₐ) ein Luftabführkanal (60; 60ₐ, 61) zu einem Durchbruch (40) in einem den Schleusraum (24) vorgeordneten Einlaufgehäuse (34) geführt und der Luftabführungskanal am Durchbruch mit einer Abluftleitung verbindbar ist.

4. Vorrichtung nach einem der Ansprüche 1 bis 3, **dadurch gekennzeichnet, dass** der Dichtkörper (56, 56ₐ) mit einer Kegelspitze (57) für den ringförmigen Sitz (63) versehen ist.

5. Vorrichtung nach einem der Ansprüche 1 bis 4, **dadurch gekennzeichnet, dass** der Verschlusskörper (64, 64ₐ) im Bereich seiner Entlüftungsöffnung (62) mit einem längenveränderlichen Luftführungselement (60; 60ₐ, 61) als Luftabführkanal verbunden ist, wobei gegebenenfalls das Luftführungselement als Faltenbalg (60) ausgebildet ist oder als teleskopartig axial gegeneinander verschiebliche Rohrelemente (60ₐ, 61).

6. Vorrichtung nach Anspruch 5, **gekennzeichnet durch** ein an den Verschlusskörper (64, 64ₐ) angefügtes Hohlprofil (60ₐ), das andernends axial verschieblich in einem es teilweise umgreifenden Kopfprofil (61) lagert, wobei gegebenenfalls ein Außenwulst (76) an dem dem Verschlusskörper (64, 64ₐ) fernen Ende des Hohlprofils (60ₐ) an einen Innenbund (78) des umgebenden Kopfprofils (61) anschlagbar ausgebildet ist.

7. Vorrichtung nach einem der Ansprüche 1 bis 6, **dadurch gekennzeichnet, dass** dem unteren Trichterrand (66) des Verschlusskörpers (64, 64a) im Schleusraum (24) vorgesehene Anschlagelemente (58, 58ₐ) gegenüberstehen.

8. Vorrichtung nach einem der Ansprüche 3 bis 7, **gekennzeichnet durch** eine Unterdruckquelle (41) am Luftabführkanal (60; 60ₐ, 61), an dem gegebenenfalls ein Injektor (41) angeordnet ist.

9. Vorrichtung nach einem der Ansprüche 1 bis 8, **dadurch gekennzeichnet, dass** den im Schleusraum (24) bewegbaren Verschlusskörper (64, 64ₐ) eine im wesentlichen ortsfeste Dichtkante (70, 91) als Dichtungspartner umgibt.

10. Vorrichtung nach Anspruch 9, **dadurch gekennzeichnet, dass** eine Blaseinrichtung (32) zum Erzeugen eines Luftschleiers der Dichtkante (70,91) und dem Verschlusskörper (64, 64ₐ) zugeordnet ist, wobei gegebenenfalls die Blaseinrichtung (32) als Ringspaltdüse mit tangentialer Luftzuführung (33) gestaltet ist und/oder die Blaseinrichtung (32) mit ihrer Luftzuführung (33) eine gesonderte Ringeinlage zwischen Einlaufgehäuse (34) und Schleusgehäuse (22) bildet.

11. Vorrichtung nach Anspruch 10, **dadurch gekennzeichnet, dass** Dichtkante (70, 91) und Blaseinrichtung (32) im Übergangsbereich zwischen Einlaufgehäuse (34) und Schleusraum (24) bzw. einem diesen umgebenden Schleusgehäuse (22) angeordnet sind.

12. Vorrichtung nach einem der Ansprüche 1 bis 11, **dadurch gekennzeichnet, dass** der Schleusraum (24) wenigstens teilweise mit einer luftführbaren Auskleidung versehen ist, insbesondere mit einem porösen Konus (80).

13. Vorrichtung nach einem der Ansprüche 1 bis 12, **dadurch gekennzeichnet, dass** dem Schleusraum (24) ein Ventil (82) nachgeordnet und wechselweise mit dem in Einschleusrichtung (x) vor dem Schleusraum angeordneten Verschlusskörper (64, 64ₐ) schaltbar ist, wobei gegebenenfalls eine dem Ventilsitz (86) für das Ventil (82) zugeordnete Blaseinrichtung (88), insbesondere eine Ringspaltdüse, vorgesehen ist.

14. Vorrichtung nach einem der Ansprüche 1 bis 13, **dadurch gekennzeichnet, dass** dem Schleusraum (24) an seinem Auslauf eine Förderluftteilstromeinleitung (15, 16) nachgeordnet ist.

15. Vorrichtung nach einem der Ansprüche 1 bis 14, **dadurch gekennzeichnet, dass** der Hubantrieb für den Dichtkörper (56) aus einem Balgzylinder (52) besteht, und/oder dass der Hubantrieb für den Dichtkörper (46ₐ) aus einem Pneumatikzylinder (52ₐ) mit Kolben (53) besteht, insbesondere mit Plungerkolben.

16. Vorrichtung nach Anspruch 14, **dadurch gekennzeichnet, dass** der Verschlusskörper (64, 64ₐ) einerseits und feststehende Teile des Hubantriebes (52ₐ) anderseits mit Einrichtungen (58ₐ, 65) zum schrittweisen Verdrehen des Verschlusskörpers während seiner Hubbewegung um seine Längsachse (A) versehen sind, und/oder dass der Balgzylinder (52) oder der Pneumatikzylinder (52ₐ) auf einer Tragplatte (50) im Schleusraum (24) angeordnet ist.

17. Vorrichtung nach Anspruch 6 oder 16, **dadurch gekennzeichnet, dass** die Anschlagelemente (58, 58ₐ) bzw. die schleusraumseitigen Einrichtungen (65) an der Tragplatte (50) an letztere haltenden Stabprofilen (48) festgelegt sind.

18. Vorrichtung nach einem der Ansprüche 1 bis 17, **dadurch gekennzeichnet, dass** einer der Dichtungspartner eine querschnittlich einends eingespannte flexible Dichtungsfläche (90) und der andere eine deren freien Randbereich mitnehmende und sie in der Bewegungsbahn zunehmend verformende Dichtkante (91) ist, wobei die Dichtungsfläche (90) bevorzugt ein den Verschlusskörper (64, 64ₐ) umgebender Ring ist.

19. Vorrichtung nach Anspruch 18, **dadurch gekennzeichnet, dass** die Dichtungsfläche eine querschnittlich einends gehäuseseitig eingespannte Dichtlippe (90) ist und der Verschlusskörper (64ₐ) mit wenigstens einer vorspringenden Dichtkante (94) sowie mit zumindest einem die Dichtlippe untergreifenden Mitnehmer (92) versehen ist, wobei gegebenenfalls der sich gegen die Hubrichtung (y) trichterartig erweiternde Verschlusskörper (64ₐ) nahe seinem Trichterrand unter Bildung der Dichtkante (94) und eines geneigten Randabschnittes (95) einwärts verformt ist, wobei gegebenenfalls von dem geneigten Randabschnitt die Mitnehmer (92) abragen.

20. Vorrichtung nach Anspruch 18 oder 19, **dadurch gekennzeichnet, dass** die Dicke (t) der Dichtlippe (90) größer ist als der Abstand (z) der/des Mitnehmer/s (92) von der Dichtkante (94), wobei gegebenenfalls die verformbare Dichtung (90) Teil des Verschlusskörpers (64ₐ) ist und ihre Lippenkante (91) zum Rande einer ortsfesten Öffnung der Vorrichtung gerichtet ist.

21. Vorrichtung nach einem der Ansprüche 18 bis 20, **dadurch gekennzeichnet, dass** die Dichtlippe (90) einends zwischen zwei Flanschen (80) klemmend gehalten und/oder die Dichtlippe (90) querschnittlich in einem Winkel (w) von ihrer Einspannstelle (89) abwärts geneigt ist.

22. Vorrichtung nach einem der Ansprüche 18 bis 21, **dadurch gekennzeichnet, dass** die Lippenkante (91) der Dichtlippe (90) in deren entspannter Stellung etwa parallel zum Hubweg (y) bzw. der Längsachse (A) der Vorrichtung (10) verläuft.

23. Vorrichtung nach einem der Ansprüche 1 bis 22, **dadurch gekennzeichnet, dass** ein Vergleicher (98) mit einer Druckluftquelle (96) verbunden ist, an den eine Zuleitung (100) für den Ist-Förderdruck der Schleusvorrichtung (10, 10ₐ) sowie eine Zuleitung (100ₐ) von einem Sollwert-Geber (102) angeschlossen sind, wobei gegebenenfalls von dem Vergleicher (98) eine Druckluftleitung (104) für die Blaseinrichtung (32) und/oder eine Druckluftleitung (104ₐ) für eine Ringspaltdüse (15) am Luftaustrag (40) des Einlaufgehäuses (34) bzw. die luftführbare Auskleidung (80) des Schleusraumes (24) ausgehen/ausgeht.

24. Verfahren zum Einschleusen von aus einem Vorbehälter oder einem Stauraum durch einen Schleusraum in eine pneumatische Förderleitung mittels der Vorrichtung nach wenigstens einem der voraufgehenden Patentansprüche, **dadurch gekennzeichnet, dass** während des Einlaufens des Schüttgutes aus dem Schleusraum verdrängte Luft durch zumindest eine Entlüftungsöffnung im Verschlusskörper, die in einen Luftabführkanal übergeht, abgeleitet wird.

25. Verfahren nach Anspruch 24, **dadurch gekennzeichnet, dass** die verdrängte Luft aus dem Schleusraum (24) abgesaugt wird.

26. Verfahren nach Anspruch 24, **dadurch gekennzeichnet, dass** die Förderluft an mindestens zwei Einspeisestellen der Vorrichtung zugeführt wird und diese Einspeisestellen abhängig von einem vorgegebenen Sollwert des Förderdrucks und einem momentanten Istwert des Förderdrucks wechselweise gesteuert werden, wobei gegebenenfalls mit der dem Schleusraum nachgeschalteten Förderlufteinspeisung Lufteinspeisungen in die der Vorrichtung nachgeschalteten Förderleitung gekoppelt werden.

## Claims

1. Device for the inward transfer of bulk material from a preliminary container or a storage chamber through a transfer chamber (24) into a pneumatic delivery pipe, wherein the transfer chamber can be locked against the preliminary container or storage chamber by an axially movable locking body (64, 64a) and at least one sealing partner (56, 56a) located opposite it in its movement path,
**characterised in that**
the locking body (64, 64a) has at least one ventilation orifice (62) which ends in an air removal duct and during the upward locking movement (y) of a lifting element (52, 52a) can be locked by a sealing body (56, 56a), wherein its downward opening path (x) is shorter that the downward path of the lifting element with the sealing body.

2. Device according to claim 1, **characterised in that** the locking body (64, 64a) is extended in a funnel shape from a narrow cross-section forming an inner sealing edge (63) towards the sealing body (56, 56a) and the narrow cross-section is the annular seat for the sealing body in the locking position.

3. Device according to claim 1 or 2, **characterised in that** from the ventilation orifice (62) of the locking body (64, 64a) an air removal duct (60; 60a, 61) is guided to an opening (40) in an inflow housing (34) arranged upstream the transfer chamber (24) and the air removal duct can be connected at the opening to an air evacuation duct.

4. Device according to one of claims 1 to 3, **characterised in that** the sealing body (56, 56a) is provided with a conical tip (57) for the annular seat (63).

5. Device according to one of claims 1 to 4, **characterised in that** the locking body (64, 64a) is connected in the area of its ventilation orifice (62) to an air conducting element (60; 60a, 61), which can be altered in length, as air removal duct, wherein if applicable the air conducting element is constructed as expansion bellows (60) or as tube elements (60a, 61) displaceable axially in respect of one another telescopically.

6. Device according to claim 5, **characterised by** a hollow profile (60a) attached to the locking body (64, 64a), which is supported at the other end as axially displaceable in a head profile (61) partially encompassing it, wherein if applicable an outer boss (76) is constructed as able to strike against an inner collar (78) of the surrounding head profile (61) at the end of the hollow profile (60a) remote from the locking body (64, 64a).

7. Device according to one of claims 1 to 6, **characterised in that** stop elements (58, 58a) provided in the transfer chamber (24) are opposite the lower edge (66) of the funnel of the locking body (64, 64a).

8. Device according to one of claims 3 to 7, **characterised by** a vacuum source (41) on the air removal duct (60; 60a, 61), on which if applicable an injector (41) is arranged.

9. Device according to one of claims 1 to 8, **characterised in that** the locking body (64, 64a) movable in the transfer chamber (24) is surrounded by a substantially stationary sealing edge (70, 91) as sealing partner.

10. Device according to claim 9, **characterised in that** a blowing device (32) for generating a curtain of air is allocated to the sealing edge (70, 91) and the locking body (64, 64a), wherein if applicable the blowing device (32) is configured as an annular gap nozzle with tangential air supply (33) and/or the blowing device (32) with its air supply (33) forms a separate annular insert between inflow housing (34) and transfer chamber housing (22).

11. Device according to claim 10, **characterised in that** the sealing edge (70, 91) and blowing device (32) are arranged in the transition area between the inflow housing (24) and the transfer chamber (24) or a transfer chamber housing (22) surrounding the latter.

12. Device according to one of claims 1 to 11, **characterised in that** the transfer chamber (24) is provided at least partially with a ducted lining, in particular with a porous cone (80).

13. Device according to one of claims 1 to 12, **characterised in that** a valve (82) is arranged downstream the transfer chamber (24) and can be connected alternately to the locking body (64, 64a) arranged in front of the transfer chamber in the inward transfer direction (x), wherein if applicable a blowing device (88) allocated to the valve face (86) for the valve (82), in particular an annular gap nozzle, is provided.

14. Device according to one of claims 1 to 13, **characterised in that** a delivery air partial flow in-line (15, 16) is arranged downstream the transfer chamber (24) on its outflow.

15. Device according to one of claims 1 to 14, **characterised in that** the lift drive for the sealing body (56) consists of a bellows cylinder (52) and/or the lift drive for the sealing body (46a) consists of a pneumatic cylinder (52a) with piston (53), in particular with plunger piston.

16. Device according to claim 14, **characterised in that** the locking body (64, 64a) on the one hand and fixed parts of the lift drive (52a) on the other hand are provided with devices (58a, 65) for step by step rotation of the locking body about its longitudinal axis (A) during its lifting movement and/or the bellows cylinder (52) or the pneumatic cylinder (52a) is arranged on a bearing plate (50) in the transfer chamber (24).

17. Device according to claim 6 or 16, **characterised in that** the stop elements (58, 58a) or the devices (65) on the bearing plate (50) on the transfer chamber side are fixed to rod profiles (48) holding said bearing plate.

18. Device according to one of claims 1 to 17, **characterised in that** one of the sealing partners is a flexible sealing face (90) clamped cross-sectionally at one end and the other is a sealing edge (91) entraining its open edge area and deforming it increasingly in the movement path, wherein the sealing face (90) is preferably a ring surrounding the locking body (64, 64a).

19. Device according to claim 18, **characterised in that** the sealing face is a sealing lip (90) clamped cross-sectionally at one end on the housing side and the locking body (64a) is provided with at least one projecting sealing edge (94) and with at least one carrier (92) gripping the sealing lip underneath, wherein if applicable the locking body (64a), extending in a funnel shape against the lift direction (y), is inwardly deformed near its funnel edge, forming the sealing edge (94) and an inclined border section (95), wherein if applicable the carriers (92) project from the inclined border section.

20. Device according to claim 18 or 19, **characterised in that** the thickness (t) of the sealing lip (90) is greater than the distance (z) of the carrier(s) (92) from the sealing edge (94), wherein if applicable the deformable seal (90) is part of the locking body (64a) and its lip edge (91) is directed towards the border of a stationary orifice in the device.

21. Device according to one of claims 18 to 20, **characterised in that** the sealing lip (90) is held by clamping at one end between two flanges (80) and/or the sealing lip (90) is inclined downwards cross-sectionally from its clamping-in point (89) at an angle (w).

22. Device according to one of claims 18 to 21, **characterised in that** the lip edge (91) of the sealing lip (90) in its relaxed position runs approximately parallel to the lift path (y) or the longitudinal axis (A) of the device (10).

23. Device according to one of claims 1 to 22, **characterised in that** a comparator (98) is connected to a compressed air source (96), to which a feed line (100) for the actual delivery pressure of the transfer device (10, 10a) and a feed line (100a) from a set point device (102) are connected, wherein if applicable a compressed air line (104) for the blowing device (32) and/or a compressed air line (104a) for an annular gap nozzle (15) on the air discharge (40) of the inflow housing (34) or the ducted lining (80) of the transfer chamber (24) issue/s from the comparator (98).

24. Method for inward transfer from a preliminary container or a storage space through a transfer chamber into a pneumatic delivery pipe by means of the device according to at least one of the preceding patent claims, **characterised in that** during inflow of the bulk material from the transfer chamber displaced air is diverted through at least one ventilation orifice in the locking body and passes into an air removal duct.

25. Method according to claim 24, **characterised in that** the displaced air is sucked out of the transfer chamber (24).

26. Method according to claim 24, **characterised in that** the delivery air is supplied at at least two feed points in the device and these feed points are controlled alternately depending on a preset desired value of the delivery pressure and a current actual value of the delivery pressure, wherein if applicable air feeds into the delivery pipe connected downstream the device are coupled to the delivery air feed connected downstream the transfer chamber.

## Revendications

1. Dispositif destiné à introduire un produit en vrac depuis un réservoir ou un silo par l'intermédiaire d'une chambre de sas (24) dans une conduite de transport pneumatique, la chambre de sas pouvant être fermée par rapport au réservoir ou silo à l'aide d'un corps de fermeture (64, 64a) à déplacement axial et d'au moins un partenaire d'étanchéité (56, 56a) opposé à celui-ci au niveau de sa course, **caractérisé en ce que** le corps de fermeture (64, 64a) présente au moins une ouverture d'aération (62) débouchant dans un canal d'évacuation d'air et pouvant être fermée, lors du mouvement de fermeture (y) vers le haut d'un élément de levage (52, 52a), à l'aide d'un corps d'étanchéité (56, 56a), la course d'ouverture (x) vers le bas de celui-ci étant plus courte que la course vers le bas de l'élément de levage avec le corps d'étanchéité.

2. Dispositif selon la revendication 1, **caractérisé en ce que** le corps de fermeture (64, 64a) s'élargit tel qu'un entonnoir en direction du corps d'étanchéité (56, 56a) depuis une section transversale étroite formant un bord d'étanchéité intérieur (63), et **en ce que** la section transversale étroite est le logement annulaire du corps d'étanchéité en position de fermeture.

3. Dispositif selon la revendication 1 ou 2, **caractérisé en ce que** depuis l'ouverture d'aération (62) du corps de fermeture (64, 64a) un canal d'évacuation d'air (60 ; 60a, 61) est guidé en direction d'un passage (40) prévu dans un boîtier d'admission (34) disposé en amont de la chambre de sas (24), et **en ce que** le canal d'évacuation d'air peut être relié au niveau du passage à une conduite d'évacuation d'air.

4. Dispositif selon l'une des revendications 1 à 3, **caractérisé en ce que** le corps d'étanchéité (56, 56a) est muni d'une pointe conique (57) pour le siège (63) de forme annulaire.

5. Dispositif selon l'une des revendications 1 à 4, **caractérisé en ce que** le corps de fermeture (64, 64a), dans la zone de son ouverture d'aération (62), est relié à un élément de guidage d'air (60 ; 60a, 61) à longueur variable servant de canal d'évacuation d'air, l'élément de guidage d'air pouvant le cas échéant présenter la forme d'un soufflet pliant (60) ou la forme d'éléments tubulaires (60a, 61) à déplacement axial télescopique les uns par rapport aux autres.

6. Dispositif selon la revendication 5, **caractérisé par** un profilé creux (60a) rapporté au corps de fermeture (64, 64a) et dont l'autre extrémité est logée à déplacement axial dans un profilé de tête (61) l'entourant partiellement, un bourrelet extérieur (76) étant le cas échéant formé au niveau de l'extrémité du profilé creux (60a) éloignée du corps de fermeture (64, 64a), et pouvant venir en appui contre un collet intérieur (78) du profilé de tête (61) périphérique.

7. Dispositif selon l'une des revendications 1 à 6, **caractérisé en ce que** des éléments de butée (58, 58a) prévus dans la chambre de sas (24) sont disposés en face du bord d'entonnoir inférieur (66) du corps de fermeture (64, 64a).

8. Dispositif selon l'une des revendications 3 à 7, **caractérisé par** une source de dépression (41) sur le canal d'évacuation d'air (60; 60a, 61), sur lequel le cas échéant un injecteur (41) est disposé.

9. Dispositif selon l'une des revendications 1 à 8, **caractérisé en ce que** le corps de fermeture (64, 64a) mobile dans la chambre de sas (24) est entouré d'un bord d'étanchéité (70, 91) sensiblement fixe localement et servant de partenaire d'étanchéité.

10. Dispositif selon la revendication 9, **caractérisé en ce qu'**un organe de soufflage (32) pour générer un voile d'air est associé au bord d'étanchéité (70, 91) et au corps de fermeture (64, 64a), l'organe de soufflage (32) présentant le cas échéant la forme d'une buse à intervalle annulaire avec amenée d'air tangentielle (33), et/ou l'organe de soufflage (32) avec son amenée d'air (33) formant un insert annulaire distinct entre le boîtier d'admission (34) et le boîtier de sas (22).

11. Dispositif selon la revendication 10, **caractérisé en ce que** le bord d'étanchéité (70, 91) et l'organe de soufflage (32) sont disposés dans la zone de transition entre le boîtier d'admission (34) et la chambre de sas (24) ou un boîtier de sas (22) entourant cette dernière.

12. Dispositif selon l'une des revendications 1 à 11, **caractérisé en ce que** la chambre de sas (24) est au moins partiellement pourvue d'un revêtement conducteur d'air, notamment d'un cône poreux (80).

13. Dispositif selon l'une des revendications 1 à 12, **caractérisé en ce qu'**une valve (82) est disposée en aval de la chambre de sas (24), qui est commutable en alternance avec le corps de fermeture (64, 64a) disposé en amont de la chambre de sas, et **en ce qu'**est prévu le cas échéant, un organe de soufflage (88) associé au siège de valve (86) pour la valve (82), notamment une buse à intervalle annulaire.

14. Dispositif selon l'une des revendications 1 à 13, **caractérisé en ce qu'**une admission de flux partiel d'air de transport (15, 16) est disposée en aval de la chambre de sas (24) au niveau de la sortie de celle-ci.

15. Dispositif selon l'une des revendications 1 à 14, **caractérisé en ce que** l'entraînement de levage pour le corps d'étanchéité (56) est constitué par un vérin à soufflet (52), et/ou **en ce que** l'entraînement de levage pour le corps d'étanchéité (46a) est constitué par un vérin pneumatique (52a) avec piston (53), notamment avec piston plongeur.

16. Dispositif selon la revendication 14, **caractérisé en ce que** le corps de fermeture (64, 64a) d'une part et des éléments fixes de l'entraînement de levage (52a) d'autre part sont munis d'organes (58a, 65) pour la rotation pas à pas du corps de fermeture lors de sa course autour de son axe longitudinal (A), et/ou **en ce que** le vérin à soufflet (52) ou le vérin pneumatique (52a) est disposé sur une plaque de support (50) dans le chambre de sas (24).

17. Dispositif selon la revendication 6 ou 16, **caractérisé en ce que** les éléments de butée (58, 58a) ou les organes (65) du côté chambre de sas sont fixés sur la plaque de support (50) sur des profilés en forme de barre (48) maintenant cette dernière.

18. Dispositif selon l'une des revendications 1 à 17, **caractérisé en ce que** l'un des partenaires d'étanchéité est une surface d'étanchéité (90) flexible serrée à une extrémité de la section transversale, et l'autre est un bord d'étanchéité (91) entraînant cette surface au niveau de sa zone périphérique libre et la déformant de façon croissante au cours de la course de déplacement, la surface d'étanchéité (90) étant de préférence un anneau entourant le corps de fermeture (64, 64a).

19. Dispositif selon la revendication 18, **caractérisé en ce que** la surface d'étanchéité est une lèvre d'étanchéité (90) serrée du côté boîtier à une extrémité de la section transversale, et **en ce que** le corps de fermeture (64a) est muni d'au moins une arête d'étanchéité (94) saillante ainsi que d'au moins un entraîneur (92) accrochant par le bas de la lèvre d'étanchéité, le corps de fermeture (64a) s'élargissant en forme d'entonnoir à contresens de la direction (y) de la course étant, le cas échéant, déformé vers l'intérieur à proximité de son bord d'entonnoir, en formant l'arête d d'étanchéité (94) et un tronçon de bord (95) incliné, les entraîneurs (92) faisant saillie le cas échéant, du tronçon de bord incliné.

20. Dispositif selon la revendication 18 ou 19, **caractérisé en ce que** l'épaisseur (t) de la lèvre d'étanchéité (90) est plus grande que la distance (z) du/des entraîneur(s) (92) par rapport à l'arête d'étanchéité (94), l'étanchéité déformable (90) faisant le cas échéant partie du corps de fermeture (64a) et sa bordure de lèvre (91) étant dirigée vers le bord d'une ouverture fixe du dispositif.

21. Dispositif selon l'une des revendications 18 à 20, **caractérisé en ce que** la lèvre d'étanchéité (90) est à une extrémité maintenue par pincement de serrage entre deux brides (80), et/ou **en ce que** la lèvre d'étanchéité (90), au niveau de sa section transversale, est inclinée vers le bas d'un angle (w) depuis son emplacement de serrage (89).

22. Dispositif selon l'une des revendications 18 à 21, **caractérisé en ce que** la bordure de lèvre (91) de la lèvre d'étanchéité (90), dans la position détendue de celle-ci, s'étend sensiblement parallèle à la course (y) ou à l'axe longitudinal (A) du dispositif (10).

23. Dispositif selon l'une des revendications 1 à 22, **caractérisé en ce qu'**un comparateur (98) est relié à une source d'air comprimé (96), auquel sont connectées une conduite d'amenée (100) pour la pression de transport réelle du dispositif de sas (10, 10a) ainsi qu'une conduite d'amenée (100a) d'un transmetteur de valeur de consigne (102), **en ce que** du comparateur (98) part(ent) le cas échéant une conduite d'air comprimé (104) pour l'organe de soufflage (32) et/ou une conduite d'air comprimé (104a) pour une buse à intervalle annulaire (15) sur la sortie d'air (40) du boîtier d'admission (34), ou le revêtement conducteur d'air (80) de la chambre de sas (24).

24. Procédé destiné à introduire un produit en vrac depuis un réservoir ou un silo par l'intermédiaire d'une chambre de sas dans une conduite de transport pneumatique à l'aide du dispositif selon au moins l'une des revendications précédentes, **caractérisé en ce que** pendant l'introduction du produit en vrac, l'air chassé de la chambre de sas est évacué par au moins une ouverture d'aération prévue dans le corps de fermeture, qui se prolonge par un canal d'évacuation d'air.

25. Procédé selon la revendication 24, **caractérisé en ce que** l'air chassé est aspiré de la chambre de sas (24).

26. Procédé selon la revendication 24, **caractérisé en ce que** l'air de transport est amené au dispositif au niveau d'au moins deux emplacements d'alimentation, et **en ce que** ces emplacements d'alimentation sont commandés en alternance en fonction d'une valeur de consigne prédéterminée de la pression de transport et d'une valeur réelle momentanée de la pression de transport, des alimentations d'air dans la conduite de transport située en aval du dispositif étant le cas échéant accouplées à l'alimentation d'air de transport située en aval de la chambre de sas.
